Europäisches Patentamt

European Patent Office

Office européen des brevets

(11) Publication number: **0 422 696 A2**

# EUROPEAN PATENT APPLICATION

(21) Application number: **90124002.8**

(22) Date of filing: **11.07.86**

(51) Int. Cl.⁵: **E01F 9/08**, G08G 1/09,
E01F 9/00, G09F 13/22,
G01K 11/16

This application was filed on 12 - 12 - 1990 as a divisional application to the application mentioned under INID code 60.

(30) Priority: **23.07.85 CH 3197/85**
**03.04.86 CH 1294/85**
**08.04.86 CH 1360/86**

(43) Date of publication of application:
**17.04.91 Bulletin 91/16**

(60) Publication number of the earlier application in accordance with Art.76 EPC: **0 210 503**

(84) Designated Contracting States:
**AT BE DE FR GB IT NL SE**

(71) Applicant: **MINNESOTA MINING AND MANUFACTURING COMPANY**
**3M Center, P.O. Box 33427**
**St. Paul, Minnesota 55133-3427(US)**

(72) Inventor: **Eigenmann, Ludwig, Dr.**
**Via Dufour 3**
**CH-6900 Lugano(CH)**

(74) Representative: **Baillie, Iain Cameron et al**
**c/o Ladas & Parry Isartorplatz 5**
**W-8000 München 2(DE)**

(54) Luminous horizontal roadway marking strips, and method and devices for forming such luminous horizontal roadway markings.

(57) The marking strip includes photovoltaic cells (1) placed inside of retroreflecting prisms (2) which receive by day the sun ener gy and by night that one of the headlights of the approaching vehicles, and convert it into electric energy. Said electric e nergy charges long life micro-storage-batteries (7) which are placed in a control box (5).

Light emitting diodes (leds) are distributed along the strip in side of transparent protruding bodies.

There are also foreseen catadioptric prisms placed on the strip. The whole having a permanent active marking function, which may be excited by the approaching traffic.

One of the leds may change its color following the presence of liquid crystals, in order to forewarn the motorist of the possi ble slippery condition of the road surface.

EP 0 422 696 A2

# LUMINOUS HORIZONTAL ROADWAY MARKING STRIPS, AND METHOD AND DEVICES FOR FORMING SUCH LUMINOUS HORIZONTAL ROADWAY MARKINGS

The problem of traffic safety, especially at night, has prompted a good deal of study and experimentation, a considerable contribution having also been made by the applicant, in the specific field of the horizontal road marking; that is that marking which is designed to supply the motorist with quick and accurate information re garding the aspects of the road - curves, intersec tions, deviations, obstacles, etc. - under all kinds of illumination and weather conditions.

In addition to numerous inventions regarding nighttime traffic safety, based on the use of retroreflecting elements, the applicant has also developed systems which incorporate their own light source. Under particularly foggy or misty conditions, the efficiency of such systems is superior to the systems using retroreflecting elements. These latter systems, however, have been made more and more efficient in recent years, also through developments made by the applicant.

The applicant has claimed the development of a marking strip that gives off its own light in its Italian Patents Nos. 982,743 and 990,780 and in the corresponding USA Patent No. 3,996,556. The light is produced by incandescent or fluorescent lamps or by luminous pigments activated by visible and even non-visible light.

On the one hand, however, these light sources are not very suited for sustaining the stress of traffic and, in addition, have rather short service lives when kept constantly lit, say, during the nighttime hours. On the other hand, there is also the consideration of the required current, especially in the light of having to use - in the practical case - storage batteries to supply this current.

## The Invention

The invention is as defined in the accompanying claims.

As in the above-mentioned case, this invention involves the use of a luminous marking strip applied to the roadway sur face, which is not simply an improvement over the above-mentioned type but actually represents an important inno vation that ingeniously combines the most up-to-date tech nical discoveries to achieve the objective. The invention proposes, most importantly, the use of Light Emitting Diodes (LEDs) for providing the light for the marking strip. When, for example, a 12-volt potential is applied to these appro priately "doped" semiconductors, they emit photons and be come luminous and are visible over long distances during the nighttime hours. The amount of current drawn is very low as compared to the producing of the same amount of light by an incandescent lamp. The produced light can be more or less focused and, depending on the particular type of "dop ing" used, certain colors can be obtained. It was also un expectedly found that LEDs are resistant to traffic vibra tions, which are significant vibrations even if not very perceptibile to our physical senses.

According to this invention, the LEDs are distributed and appropriately spaced (indicatively but not necessarily at intervals of several tens of centimeters) along the marking strip, and contained inside of protruding transparent cap sules imbedded in the marking strip itself, as shown more clearly in the diagram described further on.

This invention also provides for the use of filament or halo gen type of microlamps for special applications - as des cribed further on - which are powered by an external cur rent source. As regards the current source, provision is made for all these cases to limit the amount of current re quired to the absolute minimum, the current being furnished either by photoelectric solar cells, a bank of storage bat teries or - as mentioned previously - a standard electrical network.

In all cases, the characteristic which is common for all the variations of this invention is the ability of the luminous marking strip to be activated by the light coming from the headlights of the oncoming vehicle. In this case, the marking strip is activated on command when, and for the length of time, necessary.

Provision is also made for the marking strip to be acti vated by the traffic signal lights.

One of the very important possibilities offered by the lu minous marking strip described in this invention is the possibility of providing differentiated roadmarking indi cations; for example, the use of different colored lights for signaling the presence of ice on the road.

In all the cases considered, provision is made for the com bined use of retroreflecting elements for nighttime road marking service, that can be particularly useful in an emer gency situation where the main roadmarking devices - that are the object of this invention - do not illuminate due to the current being interrupted for any reason whatsoever.

The aforementioned retroreflecting elements could be of the type described in the applicant's USA Patents Nos. 4,072,403, 4,469,645 and R 31,291.

The different ways of applying this invention are described below with reference made to the following diagrams:

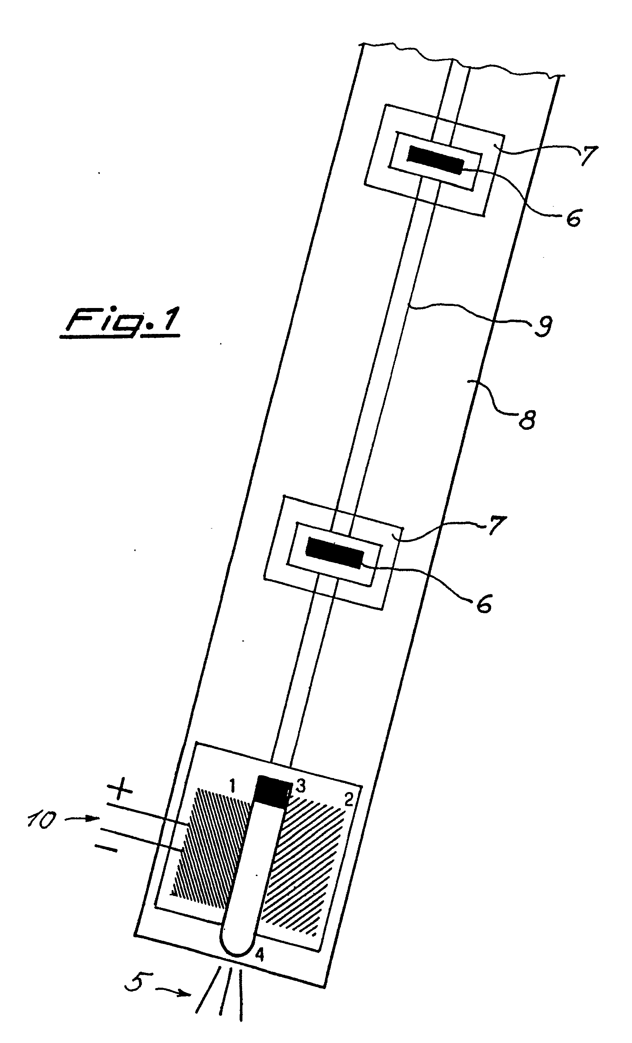

- Fig. 1, schematically showing the marking strip with the light sources applied to it, and the light-source activator which is sensitive to the lights from the headlights of the approaching motor vehicle.
- Fig.2, schematically showing the traffic-light-actuated luminous marking strip.
- Fig.3, representing the luminous marking strip applied along a curve.
- Fig.4, representing a luminous marking strip equipped with a photosensitive device for turning on the low-current-draw luminous elements, and another device for turning on the mi crolamps, fed by an external current source, when fog condi tions exist.
- Fig.5, showing a detail of Fig.4.
- Fig.6, representing a non-limiting example of a circuit for realizing the arrangement illustrated in Figs. 4 and 5.
- Fig. 7, representing an example or the distribution on the marking strip of the elements forming the alternative shown in Figs. 4 & 5.
- Fig.8, representing a luminous marking strip whose lumin ous elements are fed by current produced by solar cells and which has catadioptric prisms arranged next to the luminous elements.
- Fig.9, representing a non-limiting example of a circuit for realizing the arrangement illustrated in Fig. 8.

This invention and the various alternatives will now be ex amined in detail, with references made to the above-mentioned diagrams.

In Fig; 1, the microswitch (1) is actuated through the micro amplifier (2) by the photoelectric celle (3); the microfocus ing lens (4) has the function of concentrating the light beams (5), coming from the headlights of the oncoming motor vehicle, onto the photoelectric cell (3) , and can be appropriately o riented to select a particular actuating beam of light.

When the photoelectric cell (3) causes the microswitch (1) to close, the current coming from the source (10) passes through the conductors (9) to the light sources (6) - which are, for example, LEDs - located inside the protruding tras parent bodies (7) applied to the marking strip (8).

The conductors (9) can consist of a brass network and be im mersed in the body or in the bonding material of the strip (8). The current source (10) can be a traditional current source or a photovoltaic cell and batteries, as we shall better des cribe further on.

As an alternative, light sources (6) having different colors can be provided, alternating red and green for example, with timers, or some other such means, being used to illuminate them at different times. In this event, there will be three conductions (9) instead of two.

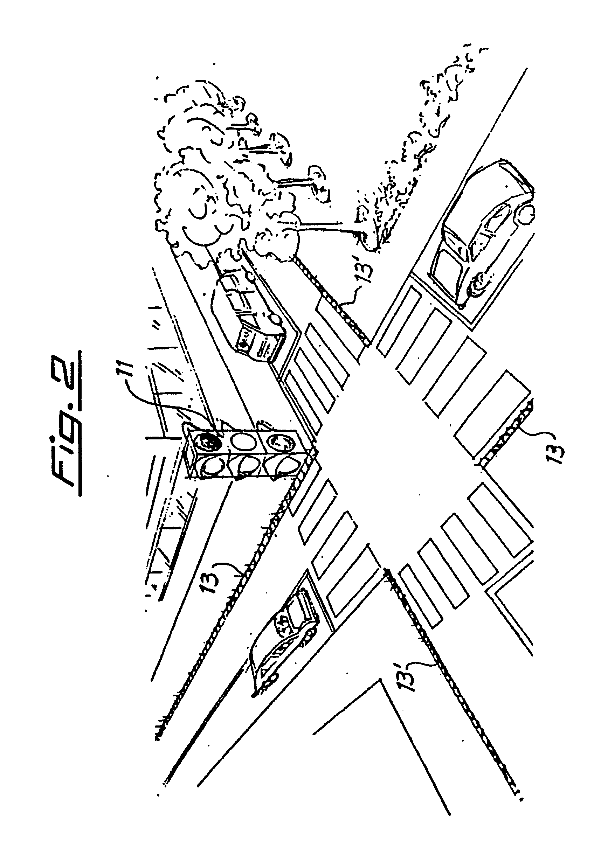

In Fig.2, the light from a traffic light (11) passes through optical fibers to groups of microamplifiers, photo electric cells and microswitches - similar to those describ ed above - which turns on the luminous sources located on the strips (13) and (13') producing a red or green color accord ing to the particular color of the traffic light.

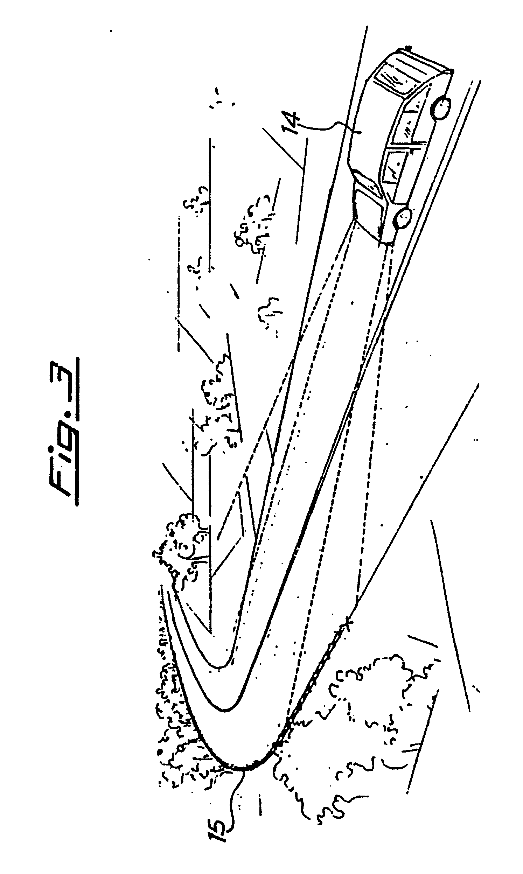

Fig. 3 shows another application of this invention. The head-light beams from vehicle (14) pass through devices similar to those described above and cause the light sources along the strip (15) to be turned on. The said light sources follow the curve of the road and thus show this curve to the driver of the oncoming motor vehicle.

This type of marking strip is especially useful at stop lights when there is fog present.

Fig.4 schematically shows a marking strip that was also de signed to provide a high degree of safety when fog conditions exist on the road, especially on curves and at intersections. The marking strip is provided with a double system of lumin ous elements, one consisting of LEDs - mentioned earlier - and the other of filament or halogen-type microlamps.

The use of filament or halogen-type microlamps are necessary for illuminating marking strips under foggy conditions be cause the intensity of just the light produced by the LEDs is not strong enough to provide adequate visibility.

The two problems that we have here are that the illuminated bodies - especially the filament type - have to resist being exposed to traffic vibrations and, secondly, they absorb a considerable amount of current. The vibration-resistance problem has, fortunately, been overcome recently by the ad vent of filament-type microlamps on the market that are quite rugged - the filament being short and thick - and particu larly resistant to vibration.

We still, however, have the problem of the high current re quirement. If the installation is not a very small one, the current has to be provided by an external source. The operat ing purpose of this current source - and, thus, its cost - can be redimensioned by automation of the roadmarking system, whereby the microlamps needed for foggy conditions are only activated by the headlights of approaching traffic when fog is present. Otherwise they do not turn on. Furthermore, they operate intermittently.

Since foggy conditions occur sporadically, the filament or halogen-type microlamp markings have to be used in conjunction with a LED system to provide a roadway marking system that is valid both when the weather is foggy and when there is no fog present.

This combined type of marking system has two photosensitive devices. The first device activates the LED circuit when it is contacted by the headlight beams of the approaching motor vehicles, and the second device deactivates the filament or halogen-type-microlamp circuit, which interrupts the current to the microlamps when there is no fog present.

This second circuit naturally needs devices that can vary the luminosity and the sensitivity of the photosensitive de vice that controls the opening and closing of the microlamp circuit. In foggy weather, the amount of light received by the photosensitive device that controls the microlamp cir cuit is considerably diminished, which keeps the circuit from opening: it remains closed. Both photosensitive devices can be provided with a focusing lens unit for concentrating the light coming from the headlights of the approaching motor ve hicles or from the LED (16), so as to increase the efficien cy.

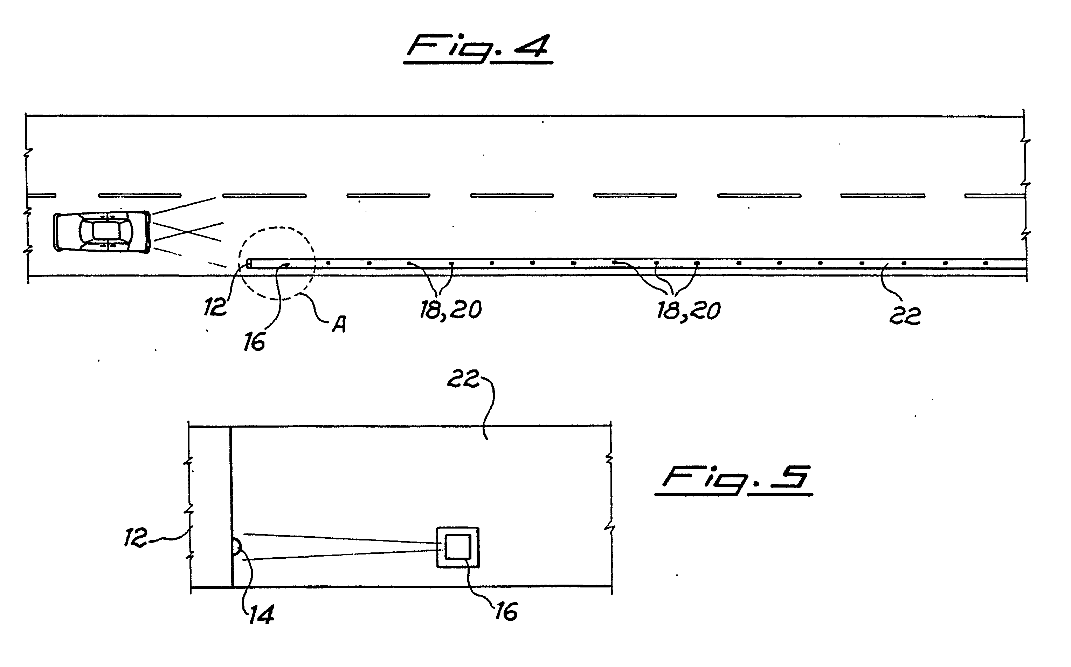

Fig.4 shows a non-limiting example of the arrangement of a marking strip (22) on a roadway, with zone A also being shown enlarged in Fig.5. The LEDs (18) or filament or halogen-type microlamps (20) - the luminous indicating elements - are shown applied onto the strip. The light detector unit (12) is al so shown, which receives the light from the headlights of the approaching motor vehicles and which can be a photoelectric cell, phototransitor or the like, as well as the fog-signal ing unit which consists of a LED (16) and a photosensitive device (14).

The diagram shown in Fig.6 is a non-limiting example of the arrangement of the various elements for realizing the fore mentioned embodiment of this invention.

Again, there is the photosensitive unit or light detector (12), which receives the light from the motor-vehicle headlights, and the analogous unit (14) that, together with the LED (16), reveals the presence of fog.

Then there are again the LEDs (18) that are turned on by the light-detector unit (12), activated by the headlights of the approaching motor vehicle. The LEDs do not turn on immediately but are controlled by a timer (24) that turns them on only after a certain period of time,to allow the vehicle to come closer to the initial part of the marking strip. The timer can be set to allow a time lag of just a few seconds or for a longer period of time, depending on the average traffic speed in the particular zone. Another timer (26) can be provided, as re quired, to make the LEDs operate in a blinking mode.

As previously mentioned, the LEDs can receive their current from a bank of standard· storage batteries, or a combination of photovoltaic solar cells and storage batteries can be used, as is described more in detail further on.

When fog conditions obtain, the reduced intensity of the light received by the photosensitive device (14) causes the relay (28) to actuate and turn off the switch (30). This causes current to flow to the microlamps (20) from an appropriate external line (32).

The microlamps (20) are also controlled by the timers (24) and (26). The presence of timer (26) to provide the blinking mode is in this case very appropriate.

The circuit is completed by appropriate amplifying trans sistors (34), the diodes (rectifiers) (36) resistances (38) and capacitors (40).

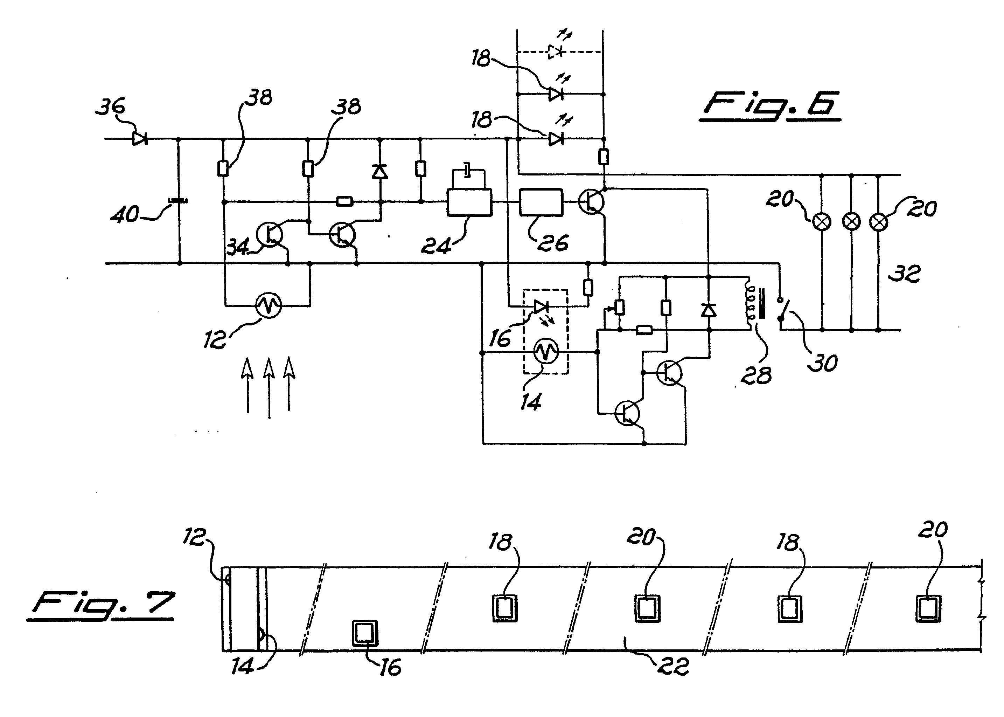

Fig.7 gives an example of the arrangement of the LEDS(18), the microlamps (20) and the LED 16 on the marking strip. The lu minous elements in this version can also be combined with, or alternated with, the type of retroreflector elements covered in the applicant's previously-mentioned patents, notwithstand ing the fact that the luminous marking strip and inherent cir cuits are realized with high-tech elements, which then pro vides a considerable guarantee of high efficiency.

As previously mentioned, the LEDs can be fed by the electri cal energy produced by solar cells or photovoltaic batteries. Such a system constitutes one of the versions that completes this invention.

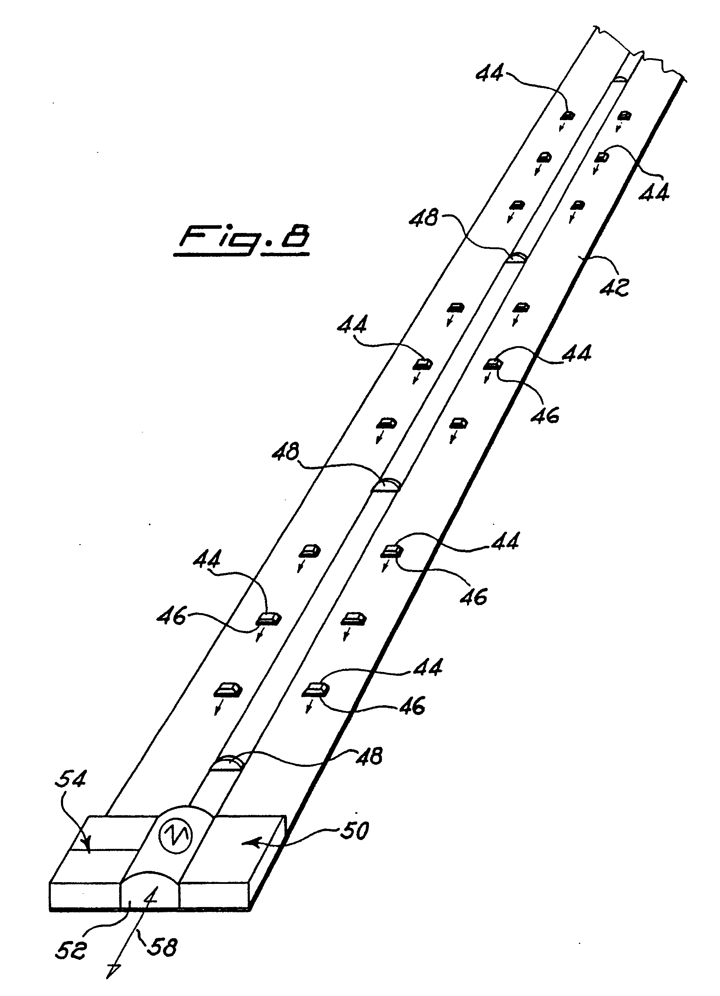

The roadmarking strip (42) shown in Fig.8 has solar cells (44) applied to it. They are arranged next to retroreflect ing elements, shown in the figure as catadioptric prisms (46), which are the retroreflecting units that are the object of the applicant's aforementioned USA Patent No. 31,291. The catadioptric prisms are shown here arranged below the solar cells but, as previously mentioned, they can be arranged next to the solar cells, or even spaced therefrom without exceeding the limits of this invention.

The arrangement of the LEDs (48) is only indicative by way of example, and in no way restrictive.

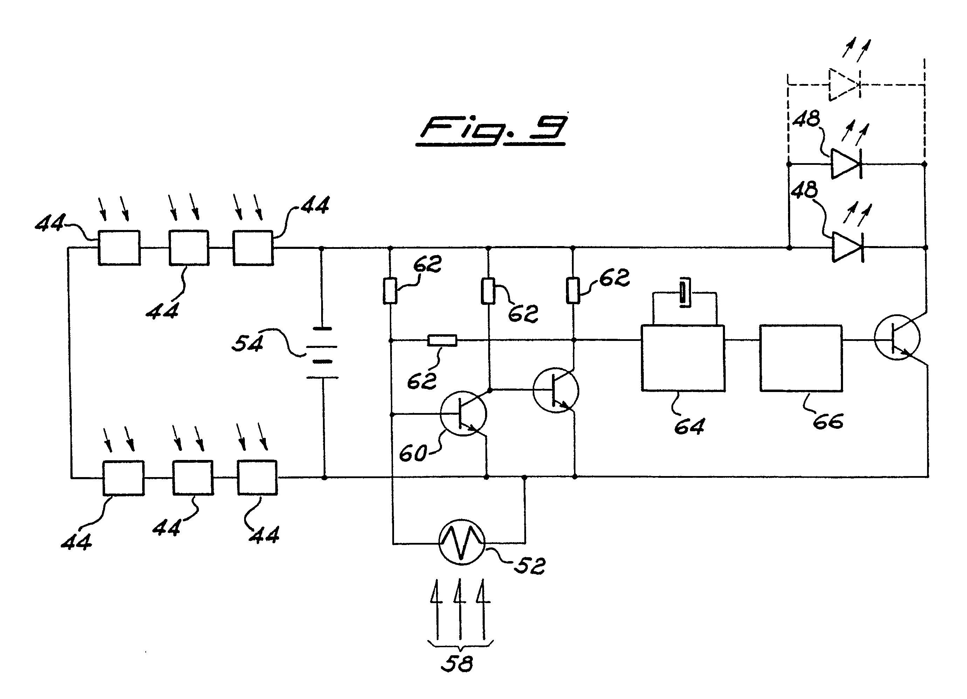

The control box (50), which contains a light detector (52), one or more batteries (54) and timers, is schematically re presented and located at the beginning end of the marking strip (42). The contents of the box (50) are connected to gether as shown, by way of example, in Fig.9. This shows how the solar cells (44) feed the batteries (54) to keep them at full charge.

The light detector (52) consists essentially of a photoelec tric cell, or a phototransistor, and a microswitch. When the light detector (52) receives the light from the headlights (58) of an approaching motor vehicle, the circuit that feeds cur rent from the batteries (54) to the LEDs (48) is closed by means of the appropriate transfer unit (60) and resistors (62). The closure of the circuit may not be immediate nor continuous. In fact, a timer (64) can be provided to cause a time lag be tween the time the beam from the headlights (58) strikes the light detector (52) and the LEDs (48) light up. Furthermore, another timer (66) can be provided to cause the light emitted by the LEDs (48) to blink on and off.

Both the light detector (52) and timers (64) & (66) are readi ly available on the market, as are also the photovoltaic bat teries, which are usually made of laminated silicon crystals. The LEDs are of the type that draw a small amount of current. It is underlined that the circuit shown in Fig.9 is only an example, and this invention can be realized using any other type of circuit that connects up the various elements regard ing this invention so as to give the same results.

The active, independent marking strip covered by this inven tion, which is activated by the approaching traffic, reveals itself as being very valuable for use in places where there are problems regarding the maintenance of road safety. This type of marking strip also has a very important secondary uti lity: giving warning of an icy road hazard. In accomplishing this end, the last part of the roadway strip is coated with a layer of cholesteric liquid crystals incapsulated and coated with a transparent film of polyurethane, which change color at low temperatures. This part of the marking strip is illumin ated by a LED, which gives the motorist a forewarning of any existing skid conditions on the road.

The warning of an ice hazard by means of the prefabricated, luminous roadway marking strip described in this invention can also be implemented electrically, using sensors located, for example, inside of the control box (50), which can give a warning that is given at a preset temperature. When this preset temperature obtains, the sensor lights up a certain-colored LED - for example, red - which provides the warning of the icy condition of the road. Such technology is already well known by the experts in this field.

## Claims

1. A prefabricated tape-like composite roadway marking material for horizontal road-marking purposes, in the form of a composite marking strip, comprising in combination:
   a) a continuous base strip (8, Fig. 1; 12, 13, Fig. 2; 22, Fig. 4 through 7; 42, Fig. 8) to be applied to the surface of the roadway;
   b) a series of transparent protruding elements (7, Fig. 1; 48, Fig. 8) located in predetermined positions distributed along said base strip, said protruding elements housing low-current-drawing active electrical light sources (6, Fig. 1; 18, Fig. 4 through 7);
   c) circuit means connecting said electrical light sources with a low-current electrical power supply including control switch means (1, Fig. 1; 12, 34, 38, 24, 26, Fig. 6; 52, 60, 62, 64, 66, Fig. 9) for controlling the energization of said light sources with current generated by said power supply, said circuit means being arranged in said base strip;
   d) said control switch means comprising a photosensitive device (1-4, Fig. 1; 12, Fig. 4 through 7; 52, Fig. 8 and 9) located on the strip and arranged for being excited by light from the head-lights of approaching motor vehicles whereby to effect energization of said light sources in dependence on light received from the head-lights of approaching motor vehicles;
   **characterized in that**
   at least a portion of the surface of said marking strip comprises a material which changes from a first colour to a second colour when the temperature falls below a predefined point.

2. The marking material according to Claim 1 and in which at least a part thereof comprises cholesteric liquid crystals that change colour at low temperatures.

3. The marking material according to Claim 2 and in which said cholesteric liquid crystals are in the form of a layer.

4. The marking material according to Claim 3 and in which said layer is coated with a transparent film of polyurethane.

5. The marking material according to Claim 2 or 3 and in which said crystals are encapsulated with a transparent film of polyurethane.

6. The marking material according to any one of Claims 1 to 5 and in which at least one of said light sources is positioned to illuminate said portion of the surface of said marking strip.

7. The marking material according to anyone of Claims 1 to 6 and in which said control switch means further comprises a timer (64, Fig. 9) to cause a time lag between the time said photosensitive device (52, Fig. 9) is excited and when said low-current-drawing light sources are energized.

8. The marking material according to anyone of Claims 1 to 7 and in which said control switch means further comprises a timer (66, Fig. 9) to cause said low-current-drawing sources to operate in a blinking mode.

9. The marking material according to any one of Claims 1 to 8 and in which said low-current-drawing electrical light sources are light-emitting diodes.

10. The marking material of any of the preceding claims further characterized in that said photosensitive device comprises a light focusing unit (4, Fig. 1).

11. The marking material of any of the preceding claims further characterized in that said material further comprises retroreflecting elements (46, Fig. 8) on the surface thereof.

12. The marking material of Claim 11 further characterized in that said retroreflecting elements are catadioptric prisms.

13. The marking material of any of the preceding claims comprising photoelectric current generators (44, Fig. 8) for receiving day light solar energy and converting it into electrical energy, via suitable storage means (54, Fig. 9) for providing said low-current electrical power supply, said current generators (44) and said storage means (54) being mounted on or in said base strip.

Fig.1

# Fig.2

EP 0 422 696 A2

# Fig.3

EP 0 422 696 A2

_Fig.4_

12    16    A    18,20    18,20    22

_Fig.5_

22

12    14    16

EP 0 422 696 A2

Fig.6

Fig.7

*Fig.8*

Fig. 9

EP 0 422 696 A2